(19) Europäisches Patentamt
European Patent Office
Office européen des brevets

(11) **EP 4 428 761 A1**

(12) **EUROPEAN PATENT APPLICATION**

(43) Date of publication:
**11.09.2024 Bulletin 2024/37**

(21) Application number: **23160861.3**

(22) Date of filing: **09.03.2023**

(51) International Patent Classification (IPC):
**G06N 3/092** $^{(2023.01)}$    **G06N 3/10** $^{(2006.01)}$

(52) Cooperative Patent Classification (CPC):
**G06N 3/092; G06N 3/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Bischoff, Martin
85653 Aying, Großhelfendorf (DE)**

• **Flender, Jerome
96114 Hirschaid (DE)**
• **Körwer, Niklas
51065 Köln (DE)**
• **Tokic, Michel
88069 Tettnang (DE)**
• **von Beuningen, Anja
99085 Erfurt (DE)**

(74) Representative: **Siemens Patent Attorneys
Postfach 22 16 34
80506 München (DE)**

(54) **METHOD FOR TRAINING A NEURAL POLICY NETWORK**

(57)    A method for training a neural policy network (NPN) is provided,
- wherein the neural policy network (NPN) is configured to generate an output action vector (y) which includes at least one action to be performed in an environment based on an input state vector (x) that includes at least one state of the environment,
- wherein the method comprises a plurality of training episodes (E) and is based on reinforcement learning,
- wherein between at least some of the training episodes (E) the method comprises the additional steps of:
- determining a success indicator (SI) for the training procedure by comparing a value (R,SI) or a set of values (R,SI) characteristic of the current training history to the corresponding value (R,SI) or set of values (R,SI) for a reference training history (TH$_r$), which has been stored previously,
- transmitting the obtained success indicator (SI) to a user, at least in case a pre-defined condition for the success indicator (SI) is met.

   Furthermore, computer program product and a computer program for carrying out the method are provided.

FIG 3

EP 4 428 761 A1

**Description**

Independent of the grammatical term usage, individuals with male, female or other gender identities are included within the term.

The present invention relates to a method for training a neural policy network, wherein the neural policy network is configured to generate an output action vector, which includes at least one action to be performed in an environment based on an input state vector that includes at least one state of the environment, wherein the method is based on reinforcement learning and comprises a plurality of training episodes. The invention further relates to a computer program product and a computer program for carrying out the method.

Many modern controllers, e.g. for controlling industrial apparatuses are based on artificial intelligence (AI), for example by using artificial neural policy networks. Such neural policy networks are neural networks providing at least one action to be performed in an environment based on corresponding input states of the environment. Such a neural policy network can for example be trained by so-called reinforcement learning, based on a reward which can for example be a control gain to be achieved by the corresponding action(s).

A significant part of the development effort of such neural policy networks lies in their training in order to perform a general task. The engineers responsible for a larger system, e.g. an industrial manufacturing line with a large number of individual apparatuses, often do not have the expertise for implementing a training method for such a neural network or to judge whether an ongoing training is running successfully or not. The setup and execution of a neural network training is therefore often carried out by specialized data scientists which have very specific know-how in this field. However, it is sometimes desirable for other, less experienced users, for example an overall system's engineer, to run and supervise the training of a neural policy network. In one example, a neural network training service is offered to system's engineers and other users as a cloud-computing based service, where the user can upload a task and some parameters of the environment and download the final neural policy network when the training is completed, for example in order to embed it in a larger software package. A significant part of the total cost of the software is often caused by the computing time required for the training. For example, a training procedure can take several hours or days, even when the training is parallelized on multiple high-performance cloud-computing servers.

It is therefore an object of the present invention to provide a method for training a neural policy network, in which efficient use is made of the available computation time. Another object is to provide a training method which requires only moderate expertise by the user who sets up and executes the training.

These objects of the invention are achieved by claim 1 with respect to the training method, by claim 14 with respect to the computer program product, and by claim 15 with respect to the computer program when executed on a computer.

The method according to the invention is a method for training a neural policy network, wherein the neural policy network is configured to generate an output action vector which includes one or more actions to be performed in an environment based on an input state vector that includes at least one state of the environment. The method comprises a plurality of training episodes and is based on reinforcement learning. Each training episode comprises the steps of:

a) setting an overall reward to an initial value, in particular a value of zero,
b) determining an initial input state vector, followed by several iteration cycles, each iteration cycle comprising the substeps of:

c) processing a current input state vector by the neural policy network to obtain a current output action vector,
d) applying the current output action vector to the environment, thereby observing a next input state vector, and
e) determining a contribution to the overall reward based on the next input state vector and incrementing the overall reward by this contribution.

Between or after at least some of the training episodes, the method comprises the additional steps of:

f) determining a success indicator for the training procedure by comparing a value or a set of values characteristic of the current training history to the corresponding value or set of values for a reference training history, which has been stored previously, and
g) transmitting the obtained success indicator or a message related to this success indicator to a user, at least in case a predetermined condition for the success indicator is met.

The neural policy network can in particular comprise an input layer, which the input state vector can be fed to, and an output layer from which the output action vector is provided. Between the input layer and the output layer, the neural policy network can comprise a number of hidden layers, wherein the number of such hidden layers is related to the so-called depth of the neural policy network. Optionally, the input vector can be processed in a pre-processing step before being fed to the input layer and/or the output vector can be processed by a post-processing step after being obtained from the output layer. These optional pre-processing and post-processing steps are not shown here for the sake of simplicity. The input state vector to be fed to the neural policy network can in particular include one or more states of the environment at a plurality of time points. This plurality of time points can comprise a current time point and one or more past time points. In other words, the input state vector then does not only describe a snap shot of the current state, but also a history of its past state(s).

The environment that the neural policy network interacts with during the training can be any sort of environment, particularly a virtual environment, a real environment or a hybrid environment with both virtual and real components, such as a so-called "hardware in the loop" environment. In particular, the environment in the training can be a (virtual and/or real) apparatus or comprise such an apparatus to be controlled by a controller, where the final trained neural policy network is to be incorporated into the controller of a real apparatus.

The training of the neural policy network is to be performed such that a pre-defined task can be fulfilled when the neural policy network interacts with the environment. This predefined task can be rather general and can in particular comprise some random component, such as the handling of randomly incoming material pieces by a conveyor line. As a general training strategy, the method of reinforcement learning is used, which is generally known in the art. This training method is based on an overall reward, where contributions to the reward are obtained for the output action vectors generated by the neural policy network, the reward contributions being determined from the interaction of each output action vector with the environment.

The training procedure is divided into a series of episodes, and each episode is in turn sub-divided into a series of iteration cycles, as is generally the case in reinforcement learning. Each episode is started by an initialization, in particular by setting the overall reward to zero and by determining an initial input state vector. Each of the following iteration cycles comprises a loop over three steps. There is a pass through the neural policy network in step c), thereby obtaining a new output action vector from the current input state vector. There is an interaction of this output action vector with the environment in step d), particularly where the environment is based on the current input state vector. This interaction leads to a new input state vector to be used in the next iteration cycle. Also, a reward contribution is determined from this interaction, and the overall reward is incremented by this contribution in step e). The new input state vector observed (and thus obtained) in each iteration cycle is used in the following iteration cycle as the current input state vector to be fed into the neural policy network.

It is essential in the context of the present invention that at least between some of the training episodes, a value for a success indicator is determined and transmitted to a user, at least if a pre-defined condition is met. In other words, these additional steps can be performed either between all subsequent episodes or only every once in a while, for example every $n^{th}$ episode. The so-called "success indicator" can for example be a Boolean parameter, which can assume a value of 0 (e.g.

if the training is failing or deemed likely to fail) or 1 (e.g. if the training is succeeding or deemed likely to succeed). Alternatively, the success indicator can also have other values, for example discrete values on a scale of varying likelihood for success or continuous values for an estimated success probability.

An essential aspect of the present invention is that the value for the success indicator is derived automatically during the training based on a comparison of the current training history and at least one previously stored reference training history. This automatic determination of the success indicator is in particular carried out using a computer, e.g. the same processor used for running the neural policy network and/or simulating a virtual training environment. In the present context, the "current training history" is understood to comprise the history of input state vectors (or certain components thereof), output action vectors (or certain components thereof) and/or reward values up to the current state of the training (in particular up to the last completed episode). Similarly, the previously stored reference training history is understood to comprise the history of the corresponding parameter(s), either for a complete previous training procedure or at least for a similar number of episodes as the current training history.

Step f) comprises a comparison for either one corresponding value or, more favourably, a set of corresponding values between the current training history and the reference training history. The values involved in this comparison can for example comprise the reward used in the training, a sensitivity of output action vectors with respect to selected input vector components and/or a series of such sensitivity values for different associated time points, as will be explained in further detail below. In any case, the key feature is that an indicator for the probability of the training's success can be derived from a comparison of one or more pre-determined values, and in particular a pattern of such values, between the current training and a previously executed training. The success indicator determined in this way (or a quantity or message related to the success indicator) is then communicated to a user, at least in case a pre-defined condition for the success indicator is met. For example, there can be an output to the user if the success indicator is set to "likely to fail" or if an estimated success probability is below a certain threshold. An advantage of such a user feedback is that particularly a user who does not have a deep expertise in training neural policy networks can be warned in time if the success probability is low. In such a case, the user can either stop the training completely and thereby save valuable computing time for more promising applications and/or modify the training strategy and restart the training in order to improve the chances of success. This way, limited available computing time can be used more efficiently, even if the user who executes the training does not have the in-depth knowhow that would enable him or her to judge the success rate of a training procedure intuitively from previous personal experience.

Besides the above method, the invention refers to a computer program product with program code, which is stored in machine-readable form on a carrier, for carrying out a method according to the invention or one or more preferred embodiments of the invention when the program code is executed on a computer. Furthermore, the invention refers to a computer program with program code for carrying out the method according to the invention or one or more preferred embodiments of the invention when the program code is executed on a computer. The advantages of the computer program product and the computer program correspond to the advantages described above for the method according to the invention.

Advantageous configurations and embodiments of the invention follow from the claims dependent on claim 1 as well as the following description. The advantageous features of the method, the computer program product and the computer program can generally be interchanged and combined.

In a preferred embodiment of the invention, the neural policy network is configured for use in a controller of an apparatus. In this embodiment, the input state vector includes one or more states of the apparatus and the output action vector includes one or more actions to be performed on the apparatus. In other words, the above-mentioned "environment" either is represented by the apparatus itself or is a larger environment that comprises the apparatus. As mentioned above, the environment used in the training can generally be a virtual environment, a real environment or a mixture of both. In any case, the goal of the training procedure is to enable the apparatus to fulfill a predetermined task when the neural policy network is embedded in the controller of the apparatus.

In a preferred variant of the above embodiment, the apparatus is configured to perform a movement task and comprises one or more drives controlled by the controller. This movement task can be a transportation task or any other movement task, where the movement is effected by the at least one drive, which in turn is controlled by the controller. This controller can be a central controller for controlling a plurality of drives. It is also possible that the apparatus comprises more than one such controller. In any case, the apparatus is preferably configured to perform a transportation or other movement task automatically, and in particular this automatic working mode is enabled by a built-in controller. The apparatus can in particular be an apparatus for an industrial system such as an industrial manufacturing line or a transporting line for material pieces such as parcels and/or luggage pieces. The movement task does not have to be defined in terms of a fixed motion trajectory. Instead, it can be rather general and it can favourably contain a random input element. For example, the task can be to transport a number of randomly arriving solid material pieces in a given direction along a conveyor system, while avoiding collisions between the individual pieces. This general task can for example be defined by a system's designer or any other user, e.g. a user who initiates the training of the neural policy network. More generally speaking, the apparatus can be a transportation system for material pieces, such as a conveyor system, or a reel system.

In a preferred embodiment of the training, the training episodes are carried out in a virtual training environment on a training processor. Then in step d), the output action vector is applied to the current input state vector within a simulation model of the environment provided in the virtual training environment. In other words, when the environment is or contains an apparatus, the training is not done on the real apparatus but by using a digital (or virtual) twin. Preferably, both the simulation model of the environment and the neural policy network are provided on the separate processor.

In a preferred variant of this embodiment, the training can be carried out on a cloud computing server. In other words, the training processor can be a cloud computing server or can be part of such a cloud computing server. A cloud computing server is a virtual or physical server, hosted remotely by a cloud service provider, that customers create or access via an internet connection. An advantage of this embodiment is that the trained neural policy network obtained from the method can be provided to a customer (e.g. the operator of an industrial plant) via a software-as-a-service model. Optionally, the obtained success indicator can be transferred to a separate client computer in step g) in order to be made available to a user. However, other ways of communicating the value of the success indicator to the user can also be employed. Generally, a low success probability can be communicated to the user in the form of a warning message.

According to a generally preferred embodiment, the previously stored reference training history used in step f) can correspond to a successful training procedure. In other words, the reference training history corresponds to a previous training procedure, which has resulted in a usable trained neural policy network, which has successfully been trained to contribute to fulfilling the predefined task within the environment. In this case, a higher similarity in the comparison between the current training history and the successful reference training history will lead to a higher probability of training success in the success indicator. This similarity can for example be a similarity in absolute values for the compared value or set of values, or it can be a similarity of a pattern, as viewed across a set of values, for example a similarity in a curve shape.

According to an alternative embodiment, the previously stored reference training history used in step f) can correspond to a failed training procedure. In other words, the reference training history corresponds to a previous training procedure, which has not resulted in a usable trained neural policy network and has therefore been label as failed. In this case, a higher similarity in the comparison between the current training history and the successful reference training history will lead to a lower probability of training success in the success indicator.

In a particularly preferred embodiment of the invention, a plurality of previously stored reference training histories is available for use in step f). In a favorable variant of this, a plurality of reference training histories is also actually used in the comparison. If a plurality of successful reference trainings is used, the comparison can particularly be made between representative value(s) of the current training history and an average of the corresponding value(s) for the plurality of successful reference trainings.

It can also be particularly advantageous to use a plurality of different failed reference trainings in the comparison. A similarity of one or more representative values with a particular one of those failed reference trainings can be an indicator of what is going wrong in the current training history, at least if the cause for the failure in the failed reference training is also known.

In any case the reference trainings that are actually used for the comparison can be a subset of the available reference training histories, so in other words a selection is made before making the comparison. In other words, step f) comprises a substep of selecting at least one of the available reference training histories for use in the comparison of step f). This selection can be based on a similarity in the complexity of the environment and/or a task to be performed within the environment. For example, if the environment comprises a conveyor system, a database with a multitude of previous training histories of various conveyor systems in combination with different training tasks can be provided. From this landscape of different training histories, one or a few reference training histories can be selected for the comparison, where the complexity of the apparatus is similar and/or the task is similar. The complexity of the apparatus can for example be reflected by the number of transport belts in the conveyor system. A similarity in the task could be a similarity in the size of objects to be processed and/or for example that in both cases there is a high priority on placing an object exactly in a predetermined position. When a selection of the reference training history is based on such a similarity in the environment and/or task, a similarity in certain values or patterns is more likely to point to a higher success probability, in case the reference training was successful, or to a lower success probability in case the reference training has failed.

According to a first preferred variant for the comparison in step f), the determination of the success indicator is based on comparing at least one reward value or a quantity which depends on at least one reward value between the current training history and the reference training history. In other words, the reward determined during the reinforcement training is also used as a basis for deriving the success probability of the training. The reward values and in particular the evolution of reward values from episode to episode can yield characteristic information on how the training is performing and converging. Therefore, a success probability can in principle be derived from these values, particularly if a comparison with corresponding reward values from similar reference training procedures is made.

The above-mentioned at least one "reward value" can for example be an overall reward determined during one specific training episode, in particular the episode which was the last to complete. The comparison can then be made with the overall reward for the same episode number in the reference training. More favourably however, a comparison can be made involving a set of several reward values, e.g. the overall reward values for several completed episodes, and/or by picking the best reward value for several completed episodes. On the basis of such a set of reward values or selection of reward value(s), the comparison with a previous reference training history can yield much more robust information on the success probability compared to the use of just a single reward value. When a set of several reward values is involved in the comparison, for example a smoothing of the curves can be performed before the comparison, and/or a derivative of the reward evolution and/or an integral of the reward evolution can be determined. In this way it is possible to use not just the absolute value(s) of the reward in the comparison, but also information on the shape of the curves and characteristic patterns in the evolution of the reward from episode to episode.

According to a specific favorable embodiment of this first variant, the automatically determined value for the success indicator is derived from

- a difference of absolute values in the overall reward and/or
- a quantity which depends on the overall reward and/or
- a difference between changes in the overall reward and/or
- a quantity that depends on the overall reward between episodes,

each difference being obtained from a comparison between the current training history and the reference training history.

For example, the values of the best reward obtained for any previous episode can be compared between the current training history and the reference training history. If the difference (either in absolute or relative terms) is large compared to a predetermined threshold value, the success indicator can be assigned a comparatively low value, indicative of a low success probability, and vice versa. In a similar fashion, comparisons can be made between derivatives or integrals of the reward evolution, i.e. the overall reward values as a function of episode number. These are examples of quantities that depend on the evolution of overall reward between episodes.

More specifically, the automatically determined value for the success indicator can be derived from a difference in the shape of the curves of the overall reward as a function of episode number, as compared between the current training history and the reference training history. The curve shape of the evolution of the reward as a function of episode number can be an even more robust indicator of success probability than the absolute values of the reward, particularly if the complexity of the environment and/or the task to be performed in the environment are slightly different. In order to compare the shape, for example a normalization of the two curves can be performed before comparing derivatives or other measures characteristic of curve patterns. Optionally, the curves to be compared can be smoothed before the comparison.

According to a second preferred variant for the comparison in step f), the determination of the success indicator is based on comparing a sensitivity value with respect to an input state vector component or a set of such sensitivity values between the current training history and the reference training history. In other words, the comparison in step f) is based on comparing a sensitivity analysis result for the neural policy network in the current state of training with a sensitivity analysis result of the neural policy network in the reference training history. The sensitivity analysis of neural networks is a standard evaluation method which is well-known in the art. A sensitivity analysis gives the opportunity to assess the input variables in terms of the importance of their impact on the output variables and thus differentiate between significant and insignificant variables.

A sensitivity analysis can favourably be performed by the use of the backpropagation method. A more detailed description of how the sensitivity value of an input state vector component is defined and calculated is given in the unpublished European Patent application number 22215864.4, which is fully incorporated herein by reference.

When one or more sensitivity values are used in the comparison between the current training history and the reference training history, a comparatively high success probability can for example be assigned to the current training if the ranking of sensitivities for a set of input state parameters is the same as the ranking for the corresponding input state parameters in a successful reference training. Similarly, a comparatively low success probability can be assigned, if the ranking is the same as for a similar failed reference training. Additionally or alternatively to using the ranking order, the determination of the success indicator can also be based on the normalized absolute sensitivity values of one or more input state parameters. For example, a similarity in normalized absolute values for the n most significant input state parameters can result in a high contribution to the success probability, and vice versa.

According to a third preferred variant for the comparison in step f), the determination of the success indicator is based on comparing a dependence of at least one type of sensitivity value on an associated time point between the current training history and the reference training history. In other words, an analysis of the so-called "observation time horizon" is included in the comparison. As explained in the above-mentioned European Patent application 22215864.4, the input state vector can contain sets of input state parameters at different time points, for example at the current time point and a plurality of past time points. For example, a certain drive speed in an apparatus can be specified for the current time point and a list of past time points. The total set of time points used in the input state vector is called the "observation time horizon". By using the method according to the third variant, it can be determined whether the length of the observation time horizon is appropriate or whether it is too long or too short. A more detailed example of this approach will be discussed in connection with the Figures below.

According to a generally preferred embodiment of the invention, the method can comprise the additional step of:
h) determining a proposal for a modification of the training method and transmitting the proposal to the user.

In general, such a proposal can be derived from a comparison with a previous successful training history and/or a previous failed training history. For example, if a parameter in a training setup differs significantly from a previous successful training history within a similar environment, a proposal can be made to adjust this parameter to become more similar to the successful training procedure. An example for such an adjustment is the modification of one or more weighting functions in a composite reward function and/or the modification of the considered observation time horizon. In a similar fashion, a proposal for a modification can also be derived from a similarity in one or more training setup parameters to a previous unsuccessful training, in particular if it is known why the previous training procedure has failed and if this additional information is also stored together with the previous training history. In general, this embodiment is particularly advantageous in order to guide a non-expert user to modify a training setup in order to achieve a successful training of the neural policy network. The implementation of this embodiment is particularly expedient if a plurality of previous training histories is used in the comparison, particularly if a database with a landscape of various failed training histories is available. Ideally, such a database also contains additional information on reasons for the failure, such as which training setup parameter had to be changed in order to achieve a successful outcome. In this fashion, the user not just obtains a warning if the training is likely to fail, but also obtains further guidance on what to change in the next attempt. Overall, valuable resources can be saved, if the user is prompted in time to stop an unsuccessful training, and particularly if he or she is assisted in setting up better training parameters in the next attempt. Additionally or alternatively, an adaptation of the training parameters can be performed automatically. Such an automatic adaptation can for example be triggered by a certain value of the obtained success indicator. In this case, the above-mentioned proposal is also generated according to the first part of step h), but here is not transmitted to the user and implemented by the user, but rather the modification of the training setup is carried out within a so-called "meta training algorithm", e.g. based on Bayesian Optimization.

Further advantages and details of the invention may be found in the exemplary embodiments described below and in the drawings, in which:

Figure 1 shows a schematic representation of a neural policy network trained with the method,

Figure 2 shows a schematic view of an apparatus to be controlled by using such a neural policy network,

Figure 3 shows a schematic illustration of steps performed in a first embodiment of the training method,

Figure 4 shows a comparison of two reward histories, as used in step f) of a preferred variant of the method,

Figure 5 shows a series of sensitivity values, as used in step f) of another preferred variant of the method and

Figure 6 to 8 each show a dependency of sensitivity values on the associated time point, as used in step f) of another preferred variant of the method.

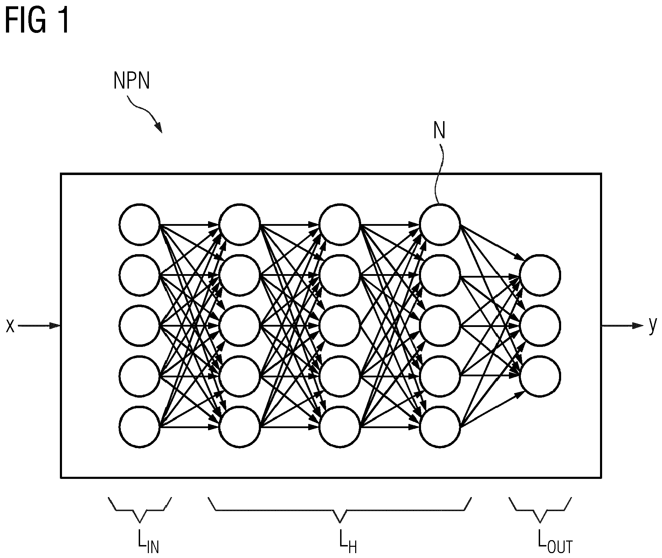

Figure 1 shows a schematic representation of a neural policy network NPN used in the method according to the present invention. The neural policy network NPN is a complex network of interconnected nodes N, which can be subdivided into layers. The network comprises an input layer $L_{IN}$, to which an input state vector x is fed, and an output layer $L_{OUT}$, from which an output action vector y is generated. Between the input layer $L_{IN}$ and the output layer $L_{OUT}$ is at least one hidden layer $L_H$. In the current example, only three such hidden layers are shown, but the actual number of hidden layers $L_H$ can be much higher in praxis, representing the depth of the neural policy network NPN. During the training, the structure of the neural policy network NPN is adapted, in particular by changing the weighted associations between the individual nodes N, which are represented by the connecting lines in Figure 1.

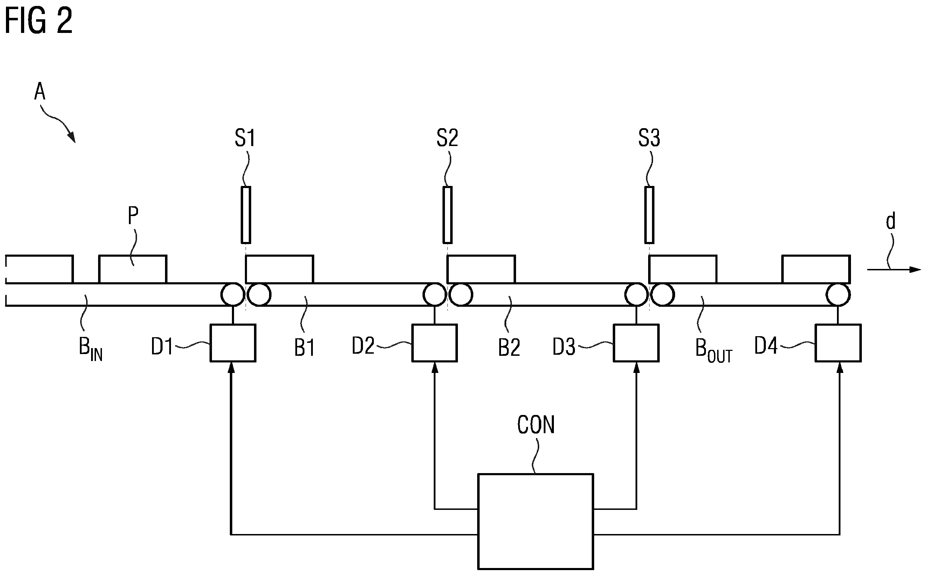

Figure 2 shows a schematic longitudinal section of an apparatus A which is to be controlled by using a neural policy network, e.g. a neural policy network similar to the one shown in Figure 1. In particular, this neural policy network can be trained with the method according to the present invention.

In this example, the apparatus A is a conveyor system of the type marketed under the term "intelligent infeed" by the company Siemens. The conveyor system comprises several conveyor belts $B_{IN}$, B1, B2, $B_{OUT}$, which are designed to transport an incoming train of material pieces P (e.g. work pieces, parcels or pieces of luggage) along an overall transport direction d. The material pieces P arrive on an inlet belt $B_{IN}$ and are transferred to an outlet belt $B_{OUT}$ by way of several intermediate infeed belts, of which two B1 and B2 are shown in this example. In a real application, the number of infeed belts can be different, and systems with three to five infeed belts are commonly used in industrial conveyor systems of this type. The purpose of the infeed belts is to adjust the spacing of an incoming train of material pieces P. For example, the task can be to equalize the distance between randomly incoming pieces and/or to position the pieces within predefined target areas on the outlet belt.

The motion of the pieces P on the individual belts is effected by corresponding drives D1 to D4. In this example, each of the belts $B_{IN}$, B1, B2, $B_{OUT}$ is shown to be connected to one drive, but the actual number of drives can also be higher than the belt number (e.g. two drives per belt $B_{IN}$, B1, B2, $B_{OUT}$), or it could be smaller (in case of coupling of belt motions or if some passive conveyors are used). The motion of the belts $B_{IN}$, B1, B2, $B_{OUT}$ by the drives D1 to D4 is controlled by a central controller CON. However, in other examples, the two belts on the periphery $B_{IN}$ and $B_{OUT}$ could also be controlled separately, while only the infeed belts are controlled by a common controller CON.

The configuration of the controller CON is based on a neural policy network NPN, which has been trained according to the method of the current invention and is embedded as a piece of software in the controller CON. In other words, the infeed belts B1 and B2, whose purpose it is to react to a randomly incoming train of material pieces P, are controlled by using artificial intelligence. The neural policy network within the controller CON is to be fed an input state vector x, which needs to contain some information on the incoming train of pieces P. In the example of Figure 2, this information is derived from a set of sensors S1, S2 and S3, which detect the passage of pieces P at the corresponding positions. The sensors S1 to S3 can for example be so-called light barriers. Such light barriers are also sometimes called photoelectric sensors. They can in particular provide a rising signal flank when a piece P starts passing through the barrier and a falling signal flank when the piece ends (or vice versa).

Generally, the input state vector x can comprise any parameters characteristic of the current state of the apparatus A, for example:

- Signals from sensors in the apparatus A, e.g. signals from light barriers,
- Signals related to the motions of the apparatus A, e.g. signals related to drive velocities or angular velocities

- Further states of the apparatus A, e.g. a value representing the use of a material buffer, a temperature or a pressure.

The output action vector y can contain any parameters related to the motion setpoints of the one or more drives, for example target drive velocities or angular velocities and/or target changes in the drive velocities or angular velocities.

Figure 2 only shows one specific example of an application, where a neural policy network is used to control actions within an environment. However, the invention can also be advantageously applied to the training of neural policy networks NPN for many other applications. Generally, the environment may or may not comprise a technical apparatus A to be controlled by the neural policy network. However, it is advantageous if such a technical apparatus A is present, and particularly if it comprises a controller CON, into which the trained neural policy network NPN is embedded.

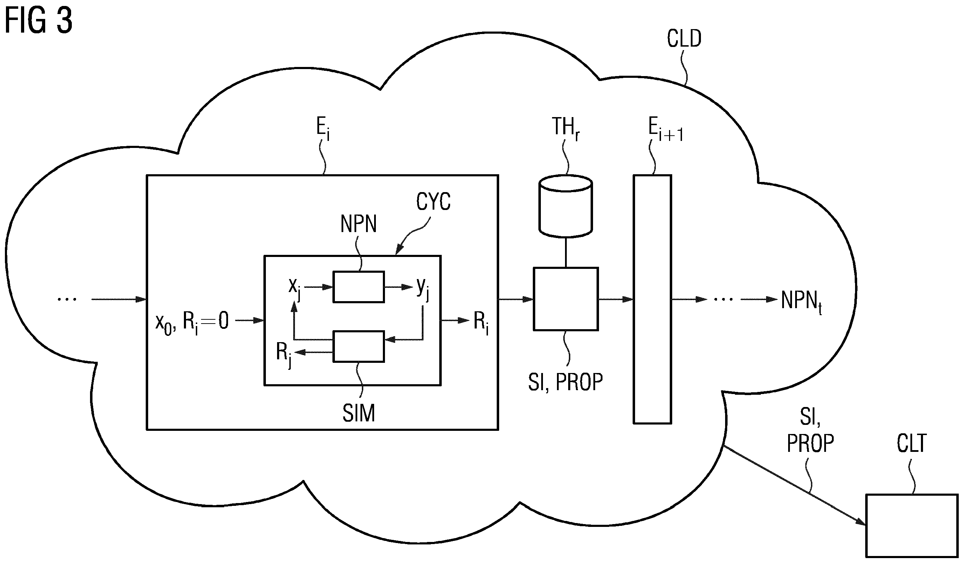

Figure 3 shows a schematic illustration of steps performed in a first embodiment of the method for training the neural policy network NPN. In this example, the essential steps of the training method are performed on a cloud computing server CLD, within a virtual training environment. The training method is based on reinforcement learning and therefore comprises a plurality of training episodes E. The training is generally performed according to a predefined task, which is represented in one or more test cases used in the training and in the definition of a reward, which is to be maximized during the training. In the context of the example of the apparatus of Figure 2, a test case can for example involve a series of randomly arriving material pieces P, and the reward can for example be based on the accuracy of positioning such pieces P on the outlet belt $B_{OUT}$ and on the avoidance of collisions between such pieces P.

In Figure 3, a selected episode $E_i$ is shown in somewhat more detail, and the following episode $E_{i+1}$ is shown rather schematically. It is understood that the method can comprise a plurality of similar episodes before $E_i$ and after $E_{i+1}$ as indicated by the dots and arrows. Each of these episodes generally comprises the steps of setting an overall reward $R_i$ to an initial value (typically 0) and determining an initial input state vector $x_0$. These initial steps of each episode E are followed by a loop of several iteration cycles CYC. Each iteration cycle CYC comprises at least the following three steps, and is therefore often referred to as a "state-actionreward" cycle: The current input state vector $x_j$ is processed by the neural policy network NPN in its current state of training to obtain a current output state vector $y_j$. Next, this resulting current output state vector $y_j$ is applied to the environment, thereby obtaining a next input state vector $x_{j+1}$, which will be the current input state vector in the next cycle j+1. Note that in this example, the index i represents the index for the episodes E, and the index j represents the index for the cycles CYC within each episode. An episode usually ends when a test case has been completed, i.e. in the above example after the stream of incoming pieces P has been processed. The environment can generally comprise a technical apparatus, for example an apparatus with one or more drives, similar to the one shown in Figure 2, or any other type of technical apparatus. The interaction of the current output action vector $y_i$ with the environment can generally take place in a virtual, real or hybrid training environment. In the current example, the training environment is purely virtual, and the interaction takes places within a simulation model SIM. Here the simulation model SIM is provided on the same cloud computing server CLD as the neural policy network. In other words, the whole sequence of episodes can be performed within this virtual environment. This simulation model SIM can for example be based on a physics-engine or it can be a data driven model (in turn using a neural network). Each cycle CYC also comprises the determination of a reward contribution $R_j$ for the current cycle j. The overall reward $R_i$ for the current episode $E_i$ is then incremented by this reward contribution $R_j$, so that at the end of each episode $E_i$ a final overall reward value $R_i$ is obtained.

The reward is the principal measure which provides a feedback for the training and, consequently, by which the success of the training can be judged. The current value of the reward R can generally be processed by the reinforcement algorithm, which adapts the neural network based on the reward value R. Such an adaptation can take place at the end of each episode E or, optionally, at the end of each iteration cycle CYC. In each case, the adaptation of the neural policy network can in particular be a chance of the structure of the neural policy network, as explained above in the context of Figure 1. This often leads to an improvement in the obtained rewards, as the training progresses from episode to episode. However, as with most optimization methods, this improvement is often not continuous. Instead, the overall trend towards higher rewards can be overlaid with noisy ripples and can sometimes be interrupted by extended periods of deteriorating rewards. One goal in the training is to let the episodes continue until a satisfactory overall reward R is obtained, and to provide a correspondingly favorable version of the neural policy network as the final trained neural policy network $NPN_t$. Typically, the training is continued either until a predetermined number of episodes is reached or until it is interrupted by a user.

What has been described so far is the generally known procedure of reinforcement learning and it will be apparent to the skilled person that the specific implementation can vary according to standard practice. The key feature of the present invention is that between or after at least some of the training episodes E, a value for a success indicator SI is derived by performing a comparison of the current training history and a previously performed reference training history $TH_r$. In this context, the "current training history" is the sum of available data (such as reward values R, states of the neural policy network NPN, input state vectors x, output action vectors y and/or any values derived from these quantities) for all the training episodes that have been performed so far. Correspondingly, the reference training history comprises equivalent data (or a subset of such data) for a previous reference training. This reference training history or a plurality of such reference training histories can for example be stored in a memory such as a database.

Generally, the value for the success indicator SI can be derived from any comparison between the current training history and the at least one reference training history. This can involve a comparison of one or more characteristic values or a set of such values, such as reward values, sensitivity values and/or the time point dependence of such sensitivity values. Alternatively or in addition to the comparison of absolute values, the comparison can also be based on curve shapes or patterns or other values that are a function of one of more such characteristic values. Examples of such characteristic values will be discussed in connection with the remaining figures below.

In any case, the comparison between the current training history and the at least one reference training history can yield an automatically determined value for the success indicator SI, which generally provides a measure for the success probability of the training. The determination of this success indicator can for example be based on a difference between characteristic values, as compared between the current training history and at least one reference training history (either in absolute numbers or in relative terms). It is essential in the context of the present invention that the obtained value for the success indicator SI or an information that is related to this success indicator SI (such as a warning message) is also transmitted to a user, at least in case a pre-defined condition for the success indicator is met. In the current example, the success indicator SI is transmitted to a client computer CLT which the user has access to. More specifically or alternatively, the success indicator can be illustrated for the user on a web interface, the user can receive an email and/or the user can download a report which comprises the success indicator. In one specific embodiment, the success indicator can be comprised in a warning message or can trigger the issuing of a warning message to the user, specifically if the current training has a low success probability. In this case, the user can be advised to stop the training, and optionally to restart it with a modified training setup. Alternatively, an automatic modification can take place, as explained above.

Generally, the transmission of the success indicator SI to the user can depend on whether or not a pre-defined condition is met. For example, a warning message to the user can be issued in case the success probability is below a pre-defined threshold value. In another embodiment, the success indicator SI can be transmitted to the user, independent on the fulfillment of such a condition.

Optionally, and in addition to automatically determining and transmitting the success indicator SI, a proposal PROP for a modification of one or more training parameters can also be derived and transmitted to the user. As will be explained in more detail in context with the specific embodiments below, this proposal PROP can for example comprise a recommendation to modify the reward function and/or to adapt an observation time horizon. More generally speaking, the proposal can be derived from a similarity to a successful reference training history. In particular, it can comprise a recommendation to adjust one or more training parameters to become more similar to a successful reference training history. Alternatively or additionally, the proposal can be derived from a similarity to a failed reference training history. In particular, it can comprise a recommendation to adjust one or more training parameters to become different from the failed reference training history. This strategy is particularly advantageous if the reasons for the failure of a previous reference training history can be attributed to particular bad settings of specific training parameters.

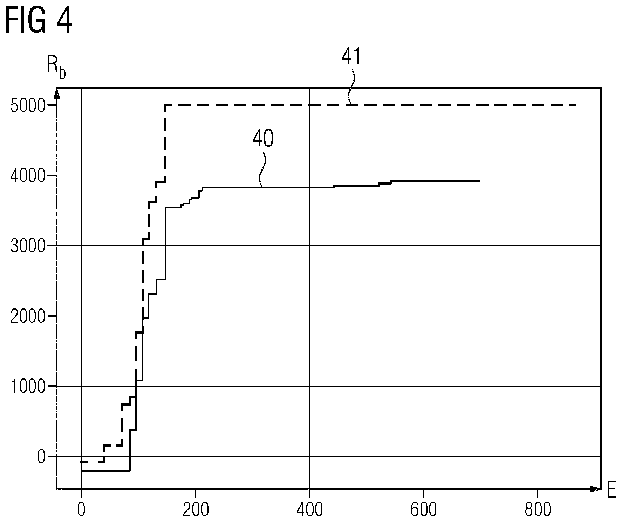

Figure 4 shows a more specific example of how the comparison between the current training history and the reference training history can be based on a characteristic set of values, in this case the evolution of the reward R with the number of episodes E. The abscissa of Figure 4 refers to the number of the episode E, and the ordinate refers to $R_b$, the best overall reward so far or, in other words, the best reward for any full episode up to the current episode E. By using the best overall reward so far $R_b$, the comparison becomes more robust with respect to fluctuations and intermittent dips in the overall reward per episode. Curve 40 shows the values for $R_b$ as a function of episode for the current training history, in this case up to an episode number of about 700, which represents the current status of the training. For comparison, curve 41 shows the corresponding values for a previous reference training history $TH_r$, which has been labelled a successful training history. The curve for this reference training history $TH_r$ extends over more episodes E, for example because the reference training history $TH_r$ has been completed, whereas the current training procedure is still running.

There are many different ways by which a success indicator can be derived from a comparison of these two curves 40 and 41. For example, the absolute values of $R_b$ at the current episode number of 700 can be compared, and if the difference is below a certain absolute number (e.g. below 2000) or below a certain relative amount (e.g. below 25%), as is the case here, the current training procedure can be assigned a comparatively high success probability. For example, it can be labelled as "likely to succeed" and this information can be transmitted to the user.

According to other examples, the comparison can involve more detailed information on the shapes of the curves, e.g. the number of past episodes for which the improvement of $R_b$ has been below a certain percentage of the current value. Using such additional information on the shapes of the curves can lead to estimates about how likely it is to obtain a further improvement. If for example, in both curves 40 and 41 the improvement in $R_b$ has been below 10% for at least the last 300 episodes, one conclusion could be that the training has already converged, and a proposal PROP to the user could be to stop the training and regard it as successful.

These are just a few selected examples of how a comparison of values or curves related to the reward can lead to the determination of a success indicator SI. Many other variations are feasible, for example also comparisons based on curves that have been smoothed and/or based on derivatives of reward curves and/or based on integrals of reward curves.

If a plurality of previous reference training histories is available for the comparison (for example within a larger database), a selection of one or more reference training histories can be made which involve an environment and/or a training task of similar complexity. Referring to the example of Figure 2, where the environment is represented by a conveyor belt apparatus A and the task is the processing of a stream of randomly arriving pieces, a database with reference trainings for many similar apparatuses and tasks could be provided. For carrying out the comparison, one or more reference trainings could then be selected, in which the number of belts and number of sensors in the apparatus was similar and/or where the task had similar priorities (e.g. whether a positioning accuracy was more important than avoiding collisions). It can be particularly advantageous to use comparisons with several reference training histories when determining the success indicator SI. In this case, it can be appropriate to weight the influence of each comparison by how similar the complexity is to the current training and/or to form an average (particularly a weighted average) of curves for several reference trainings.

If the convergence of the current training history 40 is poor, a recommendation to the user could be to stop the training in order to save valuable computing time and to restart it with a different training setup. Such a different setup could for example involve a different configuration of the reward function. In general, the reward contribution $R_j$ within a given cycle CYC can be calculated by a composite reward function involving several components. For example the reward contribution $R_j$ could be obtained as

$$R_j = w1(r1) + w2(r2) + \ldots$$

wherein r1 is a first reward component, and w1 is a corresponding weighting function, r2 is a second reward component, and w2 is a corresponding weighting function, and so on. The weighting functions w1, w2 could for example be simple multiplications with weighting factors. Alternatively, these could be more complex functions of the corresponding reward components, e.g. involving Gaussian functions or the like. There can be many reward components r1, r2, etc. in such a reward function, and a proposal PROP to the user could involve the adaptation of the weighting functions w1, w2, etc.

In order to mention a specific example related to the embodiment of Figure 2, the two weighting factors with the highest weights could for example involve the accuracy of positioning the individual pieces P on a target position on the outlet belt $B_{OUT}$ and an achievable throughput through the apparatus.

In other words, r1 could be higher for smaller values of a distance of the currently processed piece P from its target position, and r2 could be higher if the current material throughput is high and collisions can still be avoided. In case the current training procedure is estimated to have a low success probability in step f) of the method, a proposal PROP to the user could involve the adaptation of the weighting functions for the most significant reward contributions.

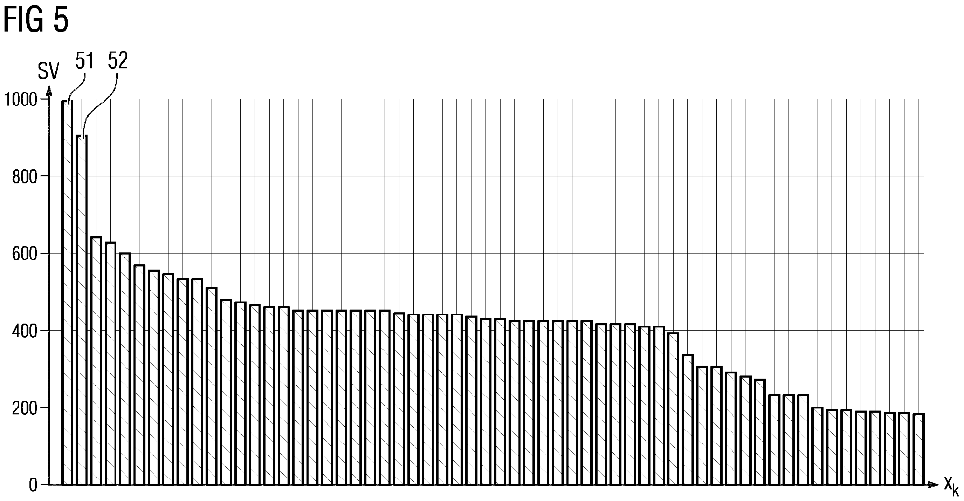

Figure 5 shows a second variant of how the comparison between the current training history and the reference training history can be based on a characteristic set of values, in this case a series of sensitivity values SV. As explained above, the sensitivity with respect to a specific component $x_k$ of the input state vector x is a measure of its impact on the output action vector. Correspondingly, the abscissa of Figure 5 refers to different components $x_k$ of the input state vector x, and the ordinate refers to their sensitivity values SV, as obtained by applying small perturbations on the output action vector y and using the backpropagation method. The plot shows a series of bars representing the calculated sensitivity values SV in decreasing order for the input state vector components $x_k$ in a conveyor system apparatus A similar to the one shown in Figure 2. In this bar graph, bar 51 represents the calculated sensitivity value SV for the input state component "slot tact signal". This is a reward-relevant signal related to the slot position of the outlet belt $B_{OUT}$. The output action vector y of such an "intelligent infeed" application typically has a very high sensitivity with respect to this input state component. Bar 52 represents the calculated sensitivity value SV for the velocity of the last infeed belt B2. This is typically another input component with a very high sensitivity.

For the sake of clarity, it is to be noted that in the example of Figure 5, each input state vector x comprises input state components not only for the current time point, but also for a plurality of past time points. The abscissa of Figure 5 indicates the corresponding input state vector components $x_k$ without distinguishing between these time points. Correspondingly, the ordinate SV reflects the sum of sensitivity values over all time points within the plurality of time points considered in the input state vector.

The bar graph of Figure 5 can for example contain the calculated sensitivities for a successful reference training history $TH_r$ for a conveyor belt application, which is similar (in the task and the complexity of the apparatus) to the one in the current training. A comparison in step f) of the method could for example involve comparing the absolute values for the sensitivities SV for a certain number input state components $x_k$, which had the highest sensitivity ranking in the reference training history. If the sensitivity values for these selected components $x_k$ differ by more than a certain threshold value (either in absolute number or in relative terms), this could result in a lower value of the estimated success probability. Alternatively or additionally, a deviation in the order of the sensitivities for a certain set of significant components $x_k$ could result in a lower value of the estimated success probability. This way, the derivation of the success probability can at least in part be based on a sensitivity analysis. In particular, the comparison of sensitivity values can generally be used in addition to the above-mentioned comparison based on reward values.

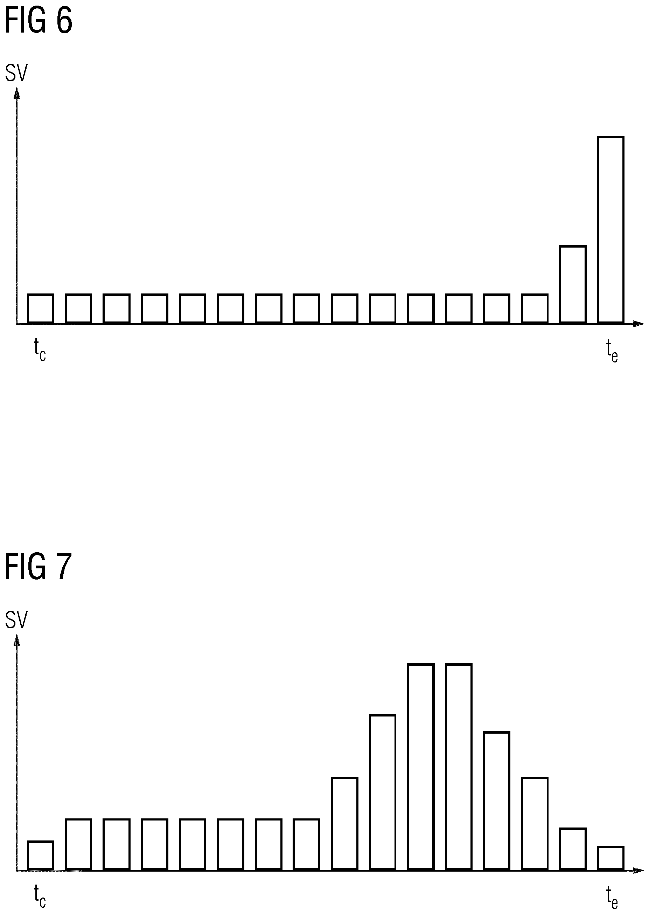

Figures 6 to 8 show a third variant of how the comparison between the current training history and the reference training history can be based on a characteristic set of values, in this case a dependency of calculated sensitivity values SV on the associated time point.

Figure 6 shows the calculated sensitivity values for a specific relevant input state vector component, for example for the velocity of an output belt in a conveyor belt system (corresponding to bar 52 in Figure 5) after a specific episode $E_i$ within the current training history. In contrast to Figure 5, however, the sensitivity is not summed up over the plurality of time points, but instead the dependence of the sensitivity value SV on the considered time point is shown explicitly. In the present example, the input state vector x contains distinct values for a series of time points for each type of input state vector components, the series of time points ranging from the current time point $t_c$ back to the earliest time point $t_e$. The whole series of time points between the current time point $t_c$ and the earliest time point $t_e$ is called the "observation time horizon". In the example of Figure 6, the sensitivity value corresponding to the earliest time point $t_e$ is the largest for the selected type of input vector components (e.g. the outlet belt velocity).

Again, the determination of the success indicator SI in step f) is based on a comparison of the current training history with a previous reference training history $TH_r$. Figure 7 shows a corresponding dependence of the sensitivity values SV on the observation time horizon for a previous reference training history, which in this case was labelled a successful training history. In this successful reference training history, the largest sensitivity values for the selected type of input state components were obtained for time points near the middle of the second half of the observation time horizon. This is an example of an observation time horizon which is well matched for this input state component. Based on the comparison between Figure 6 (for the current training history) and Figure 7 (for the successful reference training history) it can be estimated that the success probability for the current training is relatively low, because the observation time horizon for an important type of input state component is not well matched. More generally speaking, the success probability can be assigned a comparatively lower value if the profile for one or more important sensitivity values SV as a function of time points differs from the corresponding curve shape of a successful reference training, and it can be assigned a higher value if the curve shape is similar to the successful reference training.

Figure 6 shows just one example of a possible mismatch in the observation time horizon. In this case the observation time horizon should be extended so that the maximum sensitivity values SV for a relatively important parameter type do not occur near the end of the considered time period. In such an example, the output transmitted to the user can contain a proposal PROP to restart the training with a lengthened observation time horizon, in addition to transmitting the determined success indicator SI.

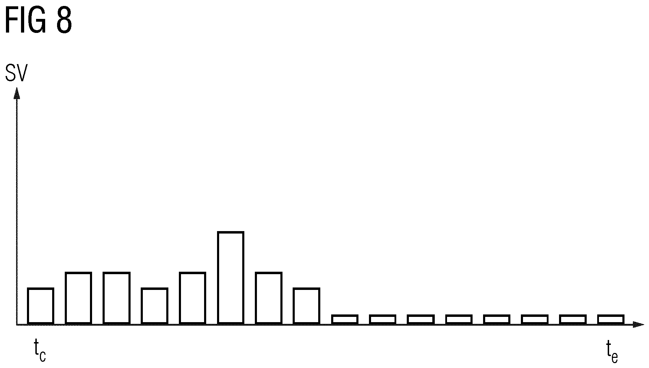

Figure 8 shows another dependence of the corresponding sensitivity values SV on the observation time horizon, for example as obtained in a different current training history. In this example, the maximum sensitivities are obtained within the first half of the observation time horizon (for time points close to the current time point $t_c$), while the values in the second half are all much lower than the maximum value. Again, this curve can be compared to the curve in Figure 7 for the successful reference training history. In this example, the success probability can be assigned a comparatively low value, based on the fact that position of the maximum differs from the reference curve and/or that the sensitivity values in the second half are below a pre-determined threshold. The shape of the bar plot in Figure 8 is indicative of an observation time horizon which is too long, resulting in large amounts of necessary computing time without much additional benefit. In this example, the output transmitted to the user can contain a proposal PROP to restart the training with a shortened observation time horizon, in addition to transmitting the determined success indicator SI.

It is to be noted that independent of the grammatical term usage within the above description, individuals with male, female or other gender identities are included within the term.

**Claims**

1. A method for training a neural policy network (NPN),

   - wherein the neural policy network (NPN) is configured to generate an output action vector (y) which includes at least one action to be performed in an environment based on an input state vector (x) that includes at least one state of the environment,

- wherein the method comprises a plurality of training episodes (E) and is based on reinforcement learning,
- wherein each training episode (E) comprises the steps of

   a) setting an overall reward (R) to an initial value,
   b) determining an initial input state vector $(x_0)$, followed by several iteration cycles (CYC), each iteration cycle (CYC) comprising the substeps of:

      c) processing a current input state vector $(x_j)$ by the neural policy network (NPN) to obtain a current output action vector $(y_j)$,
      d) applying the current output action vector $(y_j)$ to the environment at the current input state vector $(x_j)$, thereby obtaining a next input state vector $(x_{j+1})$,
      e) determining a contribution $(R_j)$ to the overall reward (R) based on the next input state vector $(x_{j+1})$ and incrementing the overall reward (R) by this contribution $(R_j)$,

- wherein between at least some of the training episodes (E) the method comprises the additional steps of:

      f) determining a success indicator (SI) for the training procedure by comparing a value (R,SI) or a set of values (R,SI) characteristic of the current training history to the corresponding value (R,SI) or set of values (R, SI) for a reference training history $(TH_r)$, which has been stored previously,
      g) transmitting the obtained success indicator (SI) or a message related to this success indicator (SI) to a user, at least in case a pre-defined condition for the success indicator (SI) is met.

2. The method according to claim 1, wherein the neural policy network (NPN) is configured for use in a controller (CON) of an apparatus (A), wherein the input state vector (x) includes at least one state $(x_k)$ of the apparatus (A) and the output action vector (y) includes at least one action to be performed on the apparatus (A).

3. The method according to claim 2, wherein the apparatus (A) is configured to perform a movement task and comprises at least one drive (D1,D2,D3,D4) controlled by the controller (CON).

4. The method according to one of the preceding claims, wherein the training episodes (E) are carried out in a virtual training environment on a training processor (PROC), wherein in step d) the output action vector $(y_i)$ is applied to the current input state vector $(x_i)$ within a simulation model (SIM) provided in the virtual training environment.

5. The method according to one of the preceding claims, wherein the previously stored reference training history $(TH_r)$ used in step f) corresponds to a successful training procedure.

6. The method according to one of the preceding claims, wherein a plurality of previously stored reference training histories $(TH_r)$ is available for use in step f).

7. The method according to claim 6, wherein step f) comprises the substep of selecting at least one of the available reference training histories $(TH_r)$ for use in the comparison in step f), based on a similarity in the complexity of the environment and/or a task to be performed in the environment.

8. The method according to one of the preceding claims, wherein in step f) the success indicator (SI) is determined by comparing at least one reward value (R) or a quantity $(R_b)$ which depends on at least one reward value (R) between the current training history and the reference training history $(TH_r)$ .

9. The method according to claim 8, wherein in step f) the success indicator (SI) depends on

   - a difference of absolute values in the overall reward (R) or a quantity $(R_b)$ which depends on the overall reward (R) and/or
   - a difference between changes in the overall reward (R) or a quantity $(R_b)$ that depends on the overall reward (R) between episodes (E),

each difference being obtained from a comparison between the current training history and the reference training history $(TH_r)$ .

10. The method according to claim 8 or 9, wherein in step f) the success indicator (SI) depends on a difference in the shape of the curves of the overall reward (R) as a function of episode number (E), as compared between the current training history and the reference training history $(TH_r)$.

11. The method according to one of the preceding claims, wherein in step f) the success indicator (SI) is determined by comparing a sensitivity (SV) with respect to an input state vector component $(x_j)$ or a set of such sensitivities (SV) between the current training history and the reference training history

(TH$_r$).

**12.** The method according to one of the preceding claims, wherein in step f) the success indicator (SI) is determined by comparing a dependence of at least one type of sensitivity value (SV) on an associated time point (tp$_c$, tp$_e$) between the current training history and the reference training history (TH$_r$) .

**13.** The method according to one of the preceding claims, which comprises the additional step of:
h) determining a proposal (PROP) for a modification of the training method and transmitting the proposal (PROP) to the user.

**14.** A computer program product with program code, which is stored in machine-readable form on a carrier, for carrying out a method according to one of the preceding claims when the program code is executed on a computer.

**15.** A computer program with program code for carrying out a method according to one of claims 1 to 13 when the program code is executed on a computer.

FIG 1

FIG 2

EP 4 428 761 A1

# FIG 3

FIG 4

FIG 5

EP 4 428 761 A1

## FIG 6

## FIG 7

# FIG 8

Europäisches
Patentamt

European
Patent Office

Office européen
des brevets

# EUROPEAN SEARCH REPORT

| | Application Number |
|---|---|
| | EP 23 16 0861 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/165143 A1 (WORLD WIDE TECH HOLDING CO LLC [US]) 4 August 2022 (2022-08-04) <br> * figure 5 * <br> * claim 1 * <br> * figures 15-19 * <br> ----- | 1-15 | INV. <br> G06N3/092 <br> G06N3/10 |
| X | SAMARTH BRAHMBHATT ET AL: "Zero-Shot Transfer of Haptics-Based Object Insertion Policies", <br> ARXIV.ORG, CORNELL UNIVERSITY LIBRARY, 201 OLIN LIBRARY CORNELL UNIVERSITY ITHACA, NY 14853, <br> 29 January 2023 (2023-01-29), XP091425259, <br> * figure 3 * <br> ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 17 July 2023 | Fonseca dos Santos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 23 16 0861

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2023

| Patent document cited in search report | Publication date | Patent family member(s) | Publication date |
|---|---|---|---|
| WO 2022165143 A1 | 04-08-2022 | NONE | |

**EP 4 428 761 A1**

**Patent documents cited in the description**

- EP 22215864